# EUROPÄISCHE PATENTSCHRIFT

(11) **EP 1 871 921 B1**
(45) Veröffentlichungstag und Bekanntmachung des Hinweises auf die Patenterteilung: **28.04.2021**
(21) Anmeldenummer: 06707634.9
(22) Anmeldetag: 22.03.2006
(51) Int. Cl.: C23C 4/08, B23K 35/02, C23C 4/04, C23C 4/134, B22F 1/00, C22C 1/04

(54) **VERFAHREN ZUR PARTIELLEN ODER VOLLSTÄNDIGEN BESCHICHTUNG DER OBERFLÄCHEN VON BAUTEILEN AUS ALUMINIUMMATERIAL**
METHOD FOR PARTIAL OR COMPLETE COATING OF THE SURFACES OF AN ALUMINIUM MATERIAL COMPONENT
PROCEDE DE REVETEMENT PARTIEL OU INTEGRAL DES SURFACES D'UN COMPOSANT EN MATERIAU D'ALUMINIUM

(30) Priorität: 22.03.2005 DE 102005013729; 22.03.2005 DE 202005004807 U
(43) Veröffentlichungstag der Anmeldung: 02.01.2008
(73) Patentinhaber: Erbslöh Aluminium GmbH, 42553 Velbert (DE)
(72) Erfinder: SUCKE, Norbert, William, 47269 Duisburg (DE); DVORAK, Michael, CH-3602 Thun (CH)
(74) Vertreter: Buse, Mentzel, Ludewig Patentanwaltskanzlei
(86) Internationale Anmeldenummer: PCT/EP2006/002627
(87) Internationale Veröffentlichungsnummer: WO 2006/100054

(56) Entgegenhaltungen:
- DE-A1- 19 626 941
- DE-A1- 19 636 897
- US-A- 5 759 707
- PATENT ABSTRACTS OF JAPAN Bd. 1996, Nr. 03, 29. März 1996 (1996-03-29) -& JP 07 310162 A (SHOWA ALUM CORP), 28. November 1995 (1995-11-28)
- PATENT ABSTRACTS OF JAPAN Bd. 1995, Nr. 09, 31. Oktober 1995 (1995-10-31) -& JP 07 164137 A (MITSUBISHI ALUM CO LTD), 27. Juni 1995 (1995-06-27)
- PATENT ABSTRACTS OF JAPAN Bd. 1996, Nr. 02, 29. Februar 1996 (1996-02-29) -& JP 07 278779 A (MITSUBISHI ALUM CO LTD), 24. Oktober 1995 (1995-10-24)
- BOWEN P: "Particle Size Distribution Measurement from Millimeters to Nanometers and from Rods to Platelets", JOURNAL OF DISPERSION SCIENCE AND TECHNOL, TAYLOR AND FRANCIS GROUP, NEW YORK, NY, US, vol. 23, no. 5, 1 January 2002 (2002-01-01), pages 631-662, XP009102859, ISSN: 0193-2691, DOI: 10.1081/DIS-120015368

## Beschreibung

Die Erfindung betrifft ein Verfahren zur partiellen oder vollständigen Beschichtung der Oberflächen von Bauteilen aus Aluminiummaterial mit feinkörnigen pulverförmigen Lotmittel für die Hartverlötung. Bei diesen Bauteilen handelt es sich beispielsweise um stranggepresste Mehrkammerhohlprofile für Wärmetauscher, wie beispielsweise Verdampfer oder Kondensatoren (Verflüssiger). Solche Mehrkammerhohlprofile werden als Flachprofile stranggepresst mit Lotmitteln für das Hartlöten versehen und mit den weiteren Komponenten des Wärmetauschers, wie beispielsweise Lamellen und/oder Sammlerrohren, durch Hartverlötung verbunden. Die Lamellen und Sammlerrohre können ebenfalls mit einer Lotmittelbeschichtung versehen sein, bevorzugt ist jedoch die Beschichtung der flachen Mehrkammerhohlprofile.

Hierzu sind die verschiedensten Verfahren bekannt geworden. In dem Dokument US 6 136 380 wird ein Tauchverfahren beschrieben, bei der eine durch Extrusion erzeugte Profilbahn durch ein Tauchbad geführt wird. Dieses flüssige Bad (Slurry) enthält eine pulverförmige Lotlegierung, ein pulverförmiges Flussmittel und ein Bindemittel, gemischt in einem Lösungsmittel. Mit dem Verfahren ist es möglich, beschichtete Mehrkammerhohlprofile in einem Inline-Verfahren zusammen mit dem Ablängvorgang der Hohlprofile herzustellen. aber auch eine Beschichtung getrennt vom Ablängprozess durchzuführen. Dabei wird die gesamte Oberfläche des Flachprofils mit einer Lotmittelbeschichtung versehen. Die Schichtdicke der Beschichtung kann mit Hilfe von Abstreifwalzen, die nach dem Tauchbad angeordnet sind, eingestellt werden.

Bei einem anderen Verfahren gemäß DE 199 07 294 bzw. WO 01/38040 wird die Beschichtung mit Hilfe von Beschichtungswalzen vorgenommen, die das Lotmittel auf die Oberfläche des Profils übertragen. Hierbei werden in der Regel nur die Breitseiten des Profils beschichtet, d.h. insbesondere im Kantenbereich ist keine oder keine ausreichende Beschichtung gewährleistet. Auch bei diesem Beschichtungsverfahren mit Hilfe von Beschichtungswalzen wird das Lotmittel, bestehend aus Lotlegierung, Flussmittel und Bindemittel, in einem Lösungsmittel gelöst aufgetragen. Dies hat den wesentlichen Nachteil, dass durch das Verdampfen des Lösungsmittels umweltgefährdende und gesundheitsschädliche Emissionen in großem Umfang auftreten. Des Weiteren wird für eine ausreichende Haftung des Flussmittels und der Lotlegierung eine verhältnismäßig große Menge an Bindemittel benötigt, welches im Lötprozess verbrennt und im Lötofen zu unerwünschten Rückständen führt.

Aus dem Dokument DE 198 59 735 ist ein Pulverbeschichtungsverfahren für Lotmittel bekannt, bei dem sowohl die Lotlegierung als auch das Flussmittel und das Bindemittel in Pulverform auf die Wärmetauscherprofile aufgetragen wird. Ein solcher Prozess ermöglicht ebenfalls eine Beschichtung mit hohen Beschichtungsgeschwindigkeiten und eine Integration in bestehende Verfahrensabläufe. Des Weiteren ist vorteilhaft an diesem Verfahren, dass ein limitierter Bindemittelauftrag erfolgen kann. Gänzlich auf Bindemittel kann jedoch nur verzichtet werden, wenn die Auftragung der Lotlegierung und/ oder des Flussmittels unmittelbar vor dem Lötprozess erfolgt. Dies wird durch elektrostatische Pulverbeschichtung unmittelbar vor dem Lötofen realisiert. Dabei wird Flussmittel auch auf die Lamellen appliziert, was aber prozessbedingt nicht notwendig ist. Von der Verfahrensökonomie hat sich die Einbindung des Beschichtungsvorgangs beim Hersteller des Profils als wirtschaftlicher erwiesen. Hier lässt sich insbesondere auch die Prozesswärme vom Strangpressen ausnutzten, um eine bessere Haftung der Beschichtung am Flachprofil zu erreichen. Auch bei diesem Verfahren wird im Kantenbereich der Profile keine gleichmäßig gute Haftung erzielt.

Die Dokumente JP 07-310162 A und JP 07-164137 A beschreiben ein thermisches Sprühverfahren zur Lotmittelbeschichtung von Aluminium-Wärmetauschern. Die Lotmittel-Pulverteilchen werden in einen Plasmastrahl eingeführt, der Temperaturen von vorzugsweise 2300°C bis 3000°C aufweist. Bei diesen Temperaturen gehen die Lotmittelpartikel in den gasförmigen Zustand über. Als Plasmagas wird ein reaktionsunfähiges Gas, nämlich Stickstoff, verwendet, um Reaktionen des Lotmittels im Plasma und beim Beschichtungsvorgang zu verhindern. Oxidationen des Lotmittels mit der Umgebungsluft können jedoch beim Aufsprühen nicht ausgeschlossen werden, da die Sprühdüse aufgrund der hohen kinetischen Energie des Lotmittels einerseits und andererseits um negative Wärmeeinwirkungen auf das Bauteil zu verhindern, in einem relativ großen Abstand zum Bauteil positioniert werden muss. Insbesondere reaktive Flussmittel können daher nicht auf diesem Wege aufgetragen werden. Darüber hinaus ist das thermische Sprühverfahren aufgrund des hohen Verbrauchs an reaktionsunfähigen Gas vergleichsweise teuer.

Aufgabe der Erfindung ist es, Bauteile aus Aluminiummaterial mit einer gleichmäßigen und gut haftenden Lotmittelbeschichtung auf allen gewünschten Oberflächenbereichen des Bauteils, insbesondere auch an den Kanten zur Verfügung zu stellen, wobei diese Bauteile wirtschaftlich herstellbar sind und zu möglichst geringen Umweltbelastungen durch Lösungsmittelemissionen sowie durch Emissionen von Pyrolyseprodukten des Bindemittels führen.

Diese Aufgabe wird mit einem Verfahren zur partiellen oder vollständigen Lotmittelbeschichtung der Oberflächen eines Bauteils aus Aluminiummaterial für die Hartverlötung mit Merkmalen des Anspruchs 1 erfüllt.

Das Lotmittel ist feinkörnig und pulverförmig. Es kann ein Siliciumpulver oder ein Lotlegierungspulver, wie beispielsweise ein Aluminium-Silizium-Legierungspulver, vorzugsweise ein untereutektisches AlSi(7-12,5)-Legierungspulver oder ein übereutektisches AlSi(12,6-40)-Legierungspulver enthalten oder umfassen. Zusätzlich, aber auch separat, kann ein Flussmittelpulver ohne oder mit Binderpulver verwendet werden. Als Flussmittel sind alle gängigen Flussmittel denkbar, beispielsweise nichtkorrosive Metallfluoridpulver, insbesondere Alkalimetallfluoro-aluminatpulver, z. B. K₁₋₃AlF₄₋₆. Es sind jedoch auch reaktive Flussmittel einsetzbar, wie Alkalimetallfluorosilikat (K₂SiF₆) oder Alkalimetallfluorozinkat (K₂ZnF₃). Als Alkalimetall wird in solchen Flussmitteln in der Regel Kalium aber auch Cäsium oder Rubidium verwendet. Aufgrund der guten Haftung der angeschmolzenen Pulverteilchen des Lotlegierungspulvers und/oder des Flussmittelpulvers kann auf ein Bindemittel ganz verzichtet werden.

Das feinkörnige pulverförmige Lotmittel für die Hartverlötung besteht aus Pulverteilchen mit Teilchengrößen von 3 bis 25 µm, die dosiert als Schicht bis 100 µm auf die Oberflächen aufgetragen sind. Bei diesen engen Pulverteilchengrößenspektren, werden sehr gleichmäßige Beschichtungen erzielt und eine gute Dosierung der Einzelkomponenten des Lotmittels erreicht. Die Gesamtmenge der aufgetragenen Lotmittel beträgt bis 25 g/m². Bei Auftragsstärken bis 10 g/m² liegt in der Regel eine monopartikulare Lotmittelschicht vor, d.h. die Flussmittel- bzw. Lotlegierungsmoleküle haften am Aluminium des Bauteils. Bei höheren Auftragsstärken ist die Zugabe von geringen Mengen, kleiner 20 Gew%, Binderpulver möglich, um eine Haftung der weiteren Flussmittel- bzw. Lotlegierungsteilchen zu verbessern. Dabei sind alle bekannten Binder mit einer Korngröße kleiner 20 µm einsetzbar, nämlich Standardbinder in Form von Klarlack, aber auch Binder für reaktive Flussmittel, beispielsweise Acryloid B67 oder Paraloid B72 der Firma Rohm und Haas.

Die gute Haftung des Lotmittels an der Oberfläche des Bauteils wird bei einer Verfahrensvariante dadurch erzielt, dass die feinkörnigen pulverförmigen Lotmittelteilchen in angeschmolzener Form auf die Oberfläche aufgebracht werden und anhaften. Die gute Haftung wird einerseits durch mechanische Verklammerung der Lotmittelteilchen an der Aluminiumoberfläche bewirkt, des Weiteren wird je nach Wahl der Pulver und der Leistung des Plasmastroms bei einigen Pulvern durch die Wärmeenergie der aufgetragenen Lotmittelteilchen eine Diffusion mancher dieser Teilchen in die Aluminiumoberfläche unterstützt. Für eine ausreichende Haftung ist es notwendig, dass der Aufschmelzgrad der feinkörnigen pulverförmigen Lotmittel mindestens 10% beträgt. Ist der Aufschmelzgrad höher, so wird in jedem Fall eine gute Haftung an der Bauteiloberfläche erzielt. Verfahrenstechnisch ist ein Aufschmelzgrad zwischen 10% und 100% eingestellbar. Die Obergrenze von 80% wird gewählt, um ein Überhitzen des Lotmittels bzw. Anschmelzungen des Aluminiums zu verhindern.

Bei einer alternativen Verfahrensvariante wird die gute Haftung des Lotmittels an der Oberfläche dadurch erzielt, dass die feinkörnigen pulverförmigen Lotmittelteilchen aus der Dampfphase heraus auf die Oberfläche des Aluminium-Bauteils aufgetragen werden. Die Lotmittelpulverteilchen werden dabei im Niedertemperaturplasma in die Dampfphase überführt.

Die Erzielung eines Aufschmelzgrades von mindestens 10 % des feinkörnigen pulverförmigen Lotmittels wird durch Energiezufuhr erreicht. Möglich ist ein Verfahren, in dem die Pulverpartikel hoch beschleunigt auf die Bauteiloberfläche auftreffen und aufgrund ihrer hohen kinetischen Energie beim Aufprall anschmelzen und anhaften. Da bei einem solchen Verfahren jedoch sehr viel Overspray entsteht, wird die Lotmittelauftragung bevorzugt mittels eines Niedertemperaturplasmastrahls vorgenommen. Üblicherweise werden bei einem Plasmastrahl Temperaturen von 6000 K bis 20 000 K gemessen. Bei einem Niedertemperaturplasma sind Temperaturen von 500 K bis 2000 K einstellbar, zur Lotmittelbeschichtung von Aluminium-Bauteilen werden Temperaturen von 500 °C bis 1000 °C bevorzugt. Bei diesen Temperaturen wird das feinkörnige pulverförmige Lotmittel teilweise aufgeschmolzen. Durch Steuerung der elektrischen Leistung des Niedertemperaturplasmastrahls, des Plasmagasvolumenstroms und der Plasmagaszusammensetzung ist der Aufschmelzgrad des Lotmittels einstellbar. Das Lotmittel wird in angeschmolzener Form auf die Oberfläche des Bauteils aufgespritzt. Dazu berührt die Plasmaflamme die zu beschichtende Oberfläche des Aluminium-Bauteils. Durch den direkten Kontakt des Niedertemperaturplasmastrahls mit der Oberfläche des Bauteils werden unerwünschte Reaktionen des Lotmittels mit der Umgebungsatmosphäre vermieden.

Bei einer Ausführungsform lässt sich die Temperatur des Niedertemperaturplasmastrahls so einstellen, dass bei Verwendung von Lotlegierungspulver und Flussmittelpulver vorwiegend das Flussmittelpulver anschmilzt. Hierzu werden Temperaturbereiche des Niedertemperaturplasmastrahls von 530 °C.bis 620 °C, vorzugsweise 550 °C bis 600 °C verwendet. Wird ausschließlich Lotlegierungspulver aufgetragen, wird der Temperaturbereich des Niedertemperaturplasmastrahls höher gewählt, d.h. 570 °C bis 650 °C. Bei Verwendung von Lotlegierungspulver, Flußmittelpulver und Binderpulver als Lotmittel wird die Leistung des Plasmastroms so eingestellt, dass zunächst die Binderpartikel oder die Binder-/Flussmittelpartikel und gegebenenfalls die Binder-/Flussmittel-/Lotlegierungspartikel aufgeschmolzen werden. Dabei ist die Temperatur so zu wählen, dass eine Pyrolyse des Binders vermieden wird.

Zur Erhöhung der Haftung erweist sich in einigen Fällen zudem der Einsatz eines übertragenden (gepulsten/ ungepulsten) Lichtbogens zwischen Plasmadüse und der Oberfläche des Aluminium-Bauteils als zweckdienlich, d.h. eine zusätzliche Gleichstromspannungsquelle beeinflusst die Leistung des Plasmastroms.

Die Beschichtung des Aluminium-Bauteils mit dem feinkörnigen pulverförmigen Lotmittel erfolgt, wie nachfolgend beschrieben. Das Lotmittelpulver wird mittels eines Pulverförderers an ein den Niedertemperaturplasmastrahl erzeugendes Plasmatron geliefert.

In diesem Pulverförderer wird das Lotmittelpulver mit Gas fluidisiert. Als Gas kommen Edelgase, Wasserstoff. Stickstoff, Kohlendioxid bzw. Luft in Frage. Besonders vorteilhaft hat sich der Einsatz von Edelgasen mit Anteilen von Wasserstoff gezeigt, beispielsweise Argon mit einem Anteil Wasserstoff oder Formiergas.

Innerhalb des Plasmatrons wird ein primäres Ungleichgewichtsplasma mit niedriger elektrischer Leistung (< 5 kW) durch hochfrequenten Wechselstrom (> 10 kHz). beispielsweise über ein Magnetron, ein RF-Plasma, eine direkte Hochspannungsentladung, eine Coronabarriereentladung oder ähnliche Vorgänge erzeugt. In das Plasmatron wird von oben durch eine Zuleitung ein Plasma- bzw. Arbeitsgas eingeleitet, so dass dadurch das primäre Plasma stabilisiert wird. Als Plasma- bzw. Arbeitsgas sind ebenfalls Edelgase. Wasserstoff. Stickstoff, Kohlendioxid bzw. Luft einsetzbar. Der aus dem Plasmatron austretende atmosphärische Plasmastrahl zeichnet sich durch eine niedrige Temperatur (im Kernbereich < 1000 °C) und geringer geometrischer Ausdehnung aus. Der Durchmesser des Plasmafreistrahls ist typischerweise kleiner als 10 mm, kann aber durch geeignete Maßnahmen auf bis zu 0,5 mm begrenzt werden.

Das feinkörnige Lotmittelpulver kann dem freien Plasmastrahl in genau dosierter Menge zugeführt werden. Das feinkörnige Lotmittelpulver wird dann infolge der Wechselwirkung mit dem Plasma angeschmolzen und in Richtung der zu beschichtenden Oberfläche des Bauteiles beschleunigt, wo es sich letztlich niederschlägt.

Das fluidisierte feinkörnige Lotmittelpulver kann jedoch auch direkt in die Düsenöffnung des austretenden Plasmastrahls eingeleitet werden.

Eine weitere Möglichkeit besteht darin. das Pulver über eine Leitung direkt durch das primäre Plasma hindurch in Strömungsrichtung des Plasmastrahls bis zur Düsenöffnung zu leiten.

Das Beschichtungsverfahren hat den besonderen Vorteil, dass das feinkörnige Pulver sehr dosiert dem Plasmastahl zugeführt werden kann.

Das vom Plasmastrahl auf die Oberfläche des Bauteils aufgebrachte Lotpulver wird auf dieser guthaftend aufgetragen, ohne dass die Oberflächentemperatur des Bauteils unzulässig ansteigt. Es ist jedoch auch möglich, das Bauteil ebenfalls zu erwärmen, um eine ausgezeichnete Haftung der aufgetragenen Schicht zu unterstützen. Dies lässt sich bei der Beschichtung von extrudierten Aluminiumbauteilen z. B. durch Ausnutzung, der Prozesswärme des Strangpressens ermöglichen.

Das Verfahren kann auch zum dosierten Auftragen eines Pulvergemischs bestehend aus einem Lotmittel und weiteren pulverförmigen Zusätzen, beispielsweise aus feinkörnigem, pulverförmigem Zink für den Korrosionsschutz oder pulverförmigen Funktionszusätzen für den Verschleißschutz, angewendet werden.

Der besondere Vorteil des erfindungsgemäßen Verfahrens besteht darin. dass eine genau dosierte, gleichmäßige und gut haftende Beschichtung an Lotmitteln für die Hartverlötung auf einer Bauteiloberfläche eines Aluminiumbauteils für Wärmetauscher aufgetragen werden kann. Die dosierte Auftragung bedeutet gleichzeitig eine limitierte Auftragung, wobei im Herstellungsprozess auf Löse- und Bindemittel verzichtet werden kann. was zur Schonung der Umwelt beiträgt. Des Weiteren kann die Auftragung an Lotmitteln an jedem Bereich der Oberfläche des Bauteils erfolgen, z. B. auch an den Kanten eines Bauteils. Darüber hinaus ist es bei einer partiellen Beschichtung des Bauteils möglich, ohne Verwendung von Maskierungen oder Blenden begrenzte Auftragsbreiten von 0,5 mm bis 10 mm lokal auf das Bauteil aufzubringen, dies dient beispielsweise dem Lotmittelauftrag an Anschlussstellen von Rohrleitungen oder Verbindungselementen.

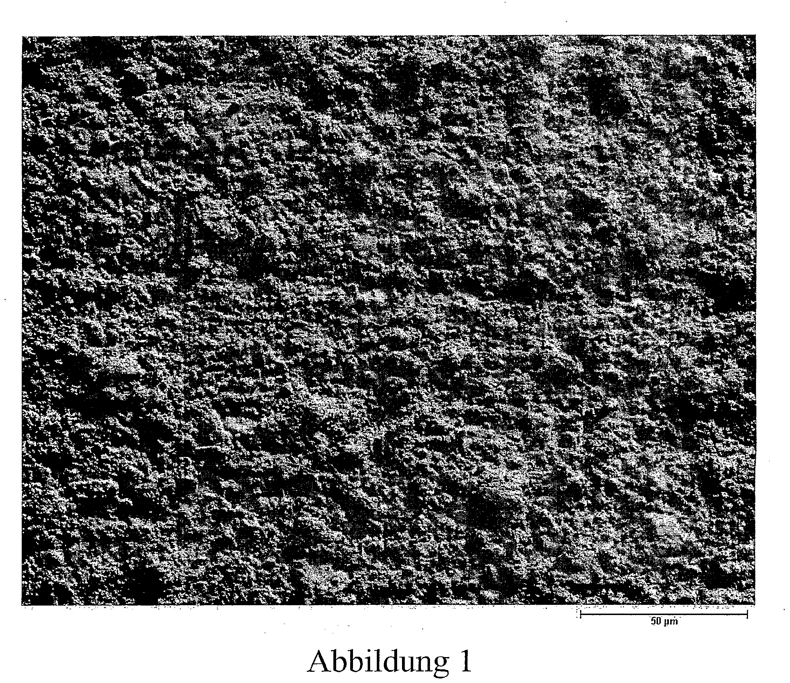

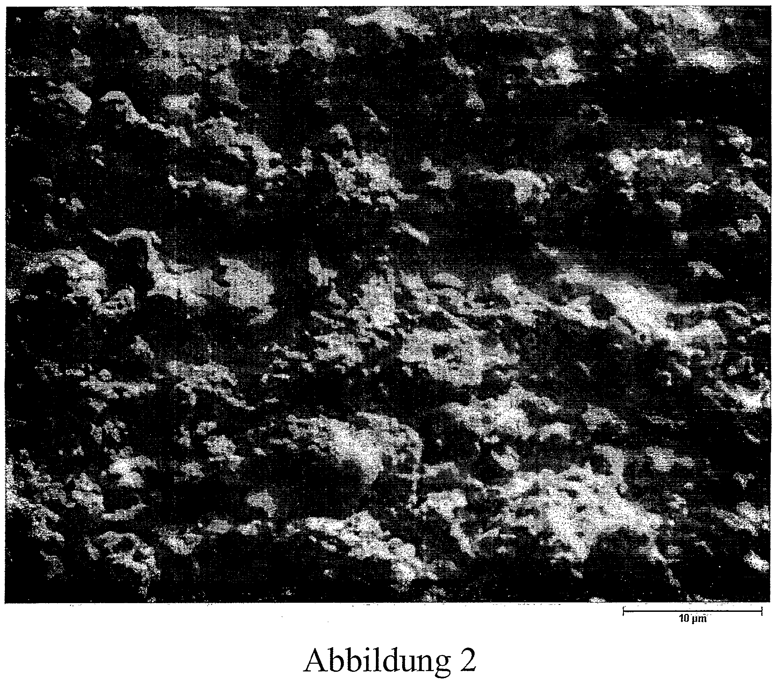

Die Abb. 1 bis 4 stellen einen Vergleich zwischen einem beschichteten Aluminium-Bauteil (Abb. 1, 2) und einem Bauteil mit einer Lotmittelbeschichtung mittels Walzenauftrag dar.

Die Plasmabeschichtung des Aluminium-Bauteils (Abb. 1,2) erfolgte bei Temperaturen von 595 °C. Als Lotmittel wurde Nocolok-Pulver (Kaliumfluoroaluminat) ohne Bindemittel dem Plasmatron zugeführt. Die Partikelgröße des eingesetzten Nocolok-Pulvers hatte eine Korngrößenverteilung, bei der 50% aller Pulverteilchen eine Partikelgröße von 2 bis 6 µm aufwiesen. Dieses Pulver wurde mittels eines Pulverförderers mit Argon, welchem 20 Vol% Formiergas zugesetzt war, fluidisiert. Durch topographische Messung konnte ein Aufschmelzgrad von etwa 70 % ermittelt werden. Das erfindungsgemäß beschichtete Bauteil wird als REM-Aufnahme in Abbildung 1 gezeigt. Die beschichtete Aluminiumoberfläche fühlt sich glatt an und zeigt eine gleichmäßige Verteilung der Lotmittelpartikel auf der Oberfläche. Bei einer stärkeren Vergrößerung (Abb. 2) wird sichtbar, dass die Partikel der Lotmittelbeschichtung zum großen Teil angeschmolzen sind.

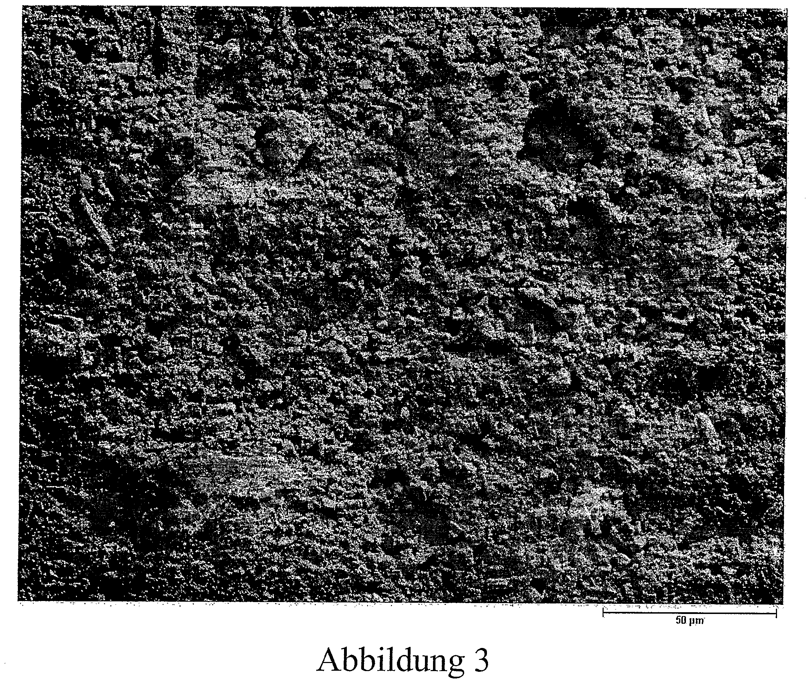

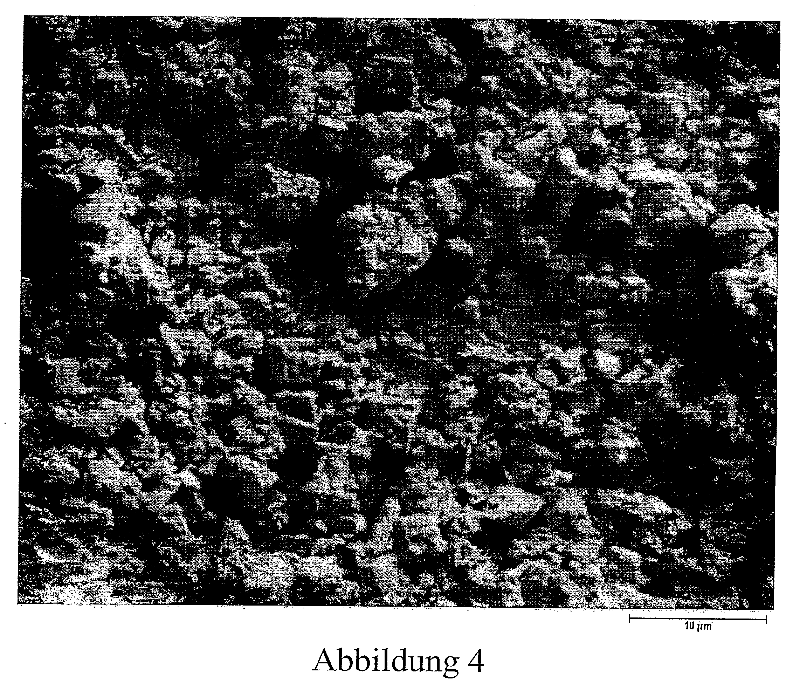

Beim Vergleichsbeispiel gezeigt in Abb. 3 und 4, wurde das gleiche Nocolok-Pulver zusammen mit einem Acrylatbindemittel in einem Lösungsmittel gelöst und mittels Walzen auf die Oberfläche aufgetragen. In diesem Fall (Abb. 3) erscheint die Oberfläche nicht ganz so gleichmäßig, auch wenn sie sich aufgrund des in der Beschichtung vorhandenen Bindemittels glatt anfühlt. Insbesondere in der Abb. 4 sind die kristallinen Lotmittelteilchen und ihre Agglomerate deutlich sichtbar.

Beide Beschichtungen weisen eine gute Haftung auf, allerdings ist im Kantenbereich die Beschichtung nur bei der oben beschriebenen Beschichtung ausreichend gut. Des Weiteren treten bei der Beschichtung mittels Walzenauftrag Lösungsmittelemissionen auf und das am beschichteten Bauteil anhaftende Bindemittel verursacht im Lötofen Pyrolyserückstände. Diese Nachteile treten bei dem erfindungsgemäßen Verfahren nicht auf.

## Patentansprüche

1. Verfahren zur partiellen oder vollständigen Beschichtung der Oberflächen von Bauteilen aus Aluminiummaterial mit feinkörnigen pulverformigen Lotmittel für die Hartverlötung, für Schichtdicken der Beschichtung bis 100 µm und Gesamtmengen an aufzutragenden Lotmittel bis 25 g/m2,
wobei das feinkörnige pulverförmige Lotmittel aus Pulverteilchen mit Teilchengrößen von 3 bis 25 µm besteht,
wobei das feinkörnige pulverförmige Lotmittel an einen durch ein Plasmatron erzeugten Niedertemperaturplasmastrahl geliefert wird,
das feinkörnige pulverförmige Lotmittel in dem Niedertemperaturplasmastrahl zumindest teilweise aufgeschmolzen wird, wobei Temperaturen des Niedertemperaturplasmastrahl von 570°C bis 650°C für die Auftragung von ausschließlich Lotlegierungspulver oder Temperaturen des Niedertemperaturplasmastrahl von 530°C bis 620°C für die Auftragung von Lotlegierungspulver und Flussmittelpulver verwendet werden,
das Lotmittel in angeschmolzener Form mittels des Niedertemperaturplasmastrahls, auf gewünschte Oberflächenbereiche des Bauteils aufgesprüht wird, wobei sich der Niedertemperaturplasmastrahl in direktem Kontakt mit der Oberfläche des Bauteils befindet, so dass unerwünschte Reaktionen des Lotmittels mit der Umgebungsatmosphäre vermieden werden und
das gleichmäßig aufgesprühte Lotmittel an allen gewünschten Oberflächenbereichen des Bauteils, nämlich auch an den Kanten des Bauteils, haftet.

2. Verfahren nach Anspruch 1, **dadurch gekennzeichnet, dass** durch Steuerung der elektrischen Leistung des Niedertemperaturplasmastrahls ein Aufschmelzgrad des feinkörnigen pulverförmigen Lotmittels zwischen 10% und 80% eingestellt wird.

3. Verfahren nach Anspruch 1 oder 2, **dadurch gekennzeichnet, dass** das Lotmittel aus einem Lotlegierungspulver und Flussmittelpulver mit oder ohne Binderpulver besteht.

4. Verfahren nach Anspruch 3, **dadurch gekennzeichnet, dass** durch die Steuerung der elektrischen Leistung des Niedertemperaturplasmastrahls nur das Flußmittelpulver des feinkörnigen pulverförmigen Lotmittels angeschmolzen wird.

5. Verfahren nach einem der Ansprüche 1 bis 4, **dadurch gekennzeichnet, dass** das feinkörnige pulverförmige Lotmittel dosiert mittels eines Pulverförderers von einem Druckgas fluidisiert an ein den Niedertemperaturplasmastrahl erzeugendes Plasmatron geliefert wird.

6. Verfahren nach einem der Ansprüche 1 bis 5, **dadurch gekennzeichnet, dass** ein primäres Ungleichgewichts-Plasma mit einer niedrigen elektrischen Leistung von < 5 kW, nämlich ein primäres Niedertemperaturplasma, innerhalb eines Plasmatrons unter Zuführung eines Arbeitsgases und Erzeugung einer Entladung erzeugt wird und der primäre Niedertemperaturplasmastrahl durch eine als Düse ausgeformte Öffnung des Plasmatrons zu der Oberfläche des Bauteils ausgeblasen wird, wobei das feinkörnige Lotmittel in das primäre Niedertemperaturplasma über das Plasmagas eingeleitet wird und von dort in den sekundären Niedertemperatur-plasmastrahl gelangt und/oder in einen sich zur Düsenöffnung hin verjüngenden Bereich der Plasmadüse und /oder direkt in den aus der Düsenöffnung austretenden sekundären Niedertemperaturplasmastrahl eingeleitet wird.

7. Verfahren nach Anspruch 6, **dadurch gekennzeichnet, dass** als Druckgas und als Plasmagas Edelgase, Wasserstoff, Stickstoff, Kohlendioxid oder Luft verwendet werden.

8. Verfahren nach einem der Ansprüche 1 bis 7, **dadurch gekennzeichnet, dass** die Oberfläche des Bauteils partiell mit Lotmittel beschichtet wird, wobei die Beschichtung des gewünschten Oberflächenbereichs des Bauteils ohne Verwendung von Maskierungen oder Blenden erzielt wird und der beschichtete Oberflächenbereich eine begrenzte Auftragsbreite von 0,5 mm bis 10 mm aufweist.

9. Verfahren nach einem der Ansprüche 1 bis 8, **dadurch gekennzeichnet, dass** die Beschichtung des Bauteils unmittelbar nach dessen Herstellung durch Strangpressen vorgenommen wird und somit die angeschmolzenen Partikel des Lotmittels auf eine warme Oberfläche treffen.

10. Verfahren nach Anspruch 9, **dadurch gekennzeichnet, dass** die Beschichtung in-line als Verfahrensschritt zwischen Strangpressen der Bauteile und Kühlen der beschichteten Bauteile erfolgt, bevor eine Weiterverarbeitung durch Trennen, Richten, Aufspulen der Bauteile oder eine Lagerung vorgenommen wird.

11. Verfahren gemäß einem der Ansprüche 1 bis 10, **dadurch gekennzeichnet, dass** als Flußmittel ein nichtkorrosives Metall-Fluorid-Pulver, nämlich ein AlkalimetallFluorid-Pulver und/oder Alkalimetallfluoroaluminat-Pulver verwendet wird.

12. Verfahren gemäß einem der Ansprüche 1 bis 11, **dadurch gekennzeichnet, dass** als Lotlegierungspulver ein Aluminium-Silicium-Legierungspulver, nämlich ein Legierungspulver mit Siliciumgehalten von 7 bis 40 Gew%, verwendet wird.

13. Verfahren gemäß einem der Ansprüche 1 bis 12, **dadurch gekennzeichnet, dass** ein reaktives Alkalimetallfluorosilikat oder Alkalimetallfluorozinkat als Lotmittel verwendet wird.

14. Verfahren gemäß einem der Anspräche 1 bis 13, **dadurch gekennzeichnet, dass** zur Beschichtung ein Pulvergemisch bestehend aus Lotmittel und aus feinkörnigen pulverförmigen Zink für den Korrosionsschutz und/oder pulverförmigen Funktionszusätzen für den Verschleißschutz verwendet wird.

## Claims

1. Process for partial or complete coating of the surfaces of components made of aluminium material with fine-grained powdery solder for brazing, for coating layer thicknesses up to 100 µm and total amounts of solder to be applied up to 25 g/m², wherein the fine-grained powder solder consists of powder particles with particle sizes of 3 to 25 pm,
wherein the fine-grained powder solder is delivered to a low-temperature plasma jet generated by a plasmatron,
and the fine-grained powdery solder is at least partially melted in the low-temperature plasma jet, temperatures of the low-temperature plasma jet of 570°C to 650°C being used for the application of solder alloy powder only or temperatures of the low-temperature plasma jet of 530°C to 620°C being used for the application of solder alloy powder and flux powder,
and the solder is sprayed in molten form by means of the low-temperature plasma jet onto desired surface areas of the component, the low-temperature plasma jet being in direct contact with the surface of the component, so that undesirable reactions of the solder with the ambient atmosphere are avoided, and
the uniformly sprayed solder adheres to all desired surface areas of the component, namely also to the edges of the component.

2. The method according to claim 1, **characterised in that** a degree of melting of the fine-grained powdery solder between 10% and 80% is adjusted by controlling the electrical power of the low-temperature plasma jet.

3. The method according to claim 1 or 2, **characterised in that** the soldering agent consists of a solder alloy powder and flux powder with or without binder powder.

4. The method according to claim 3, **characterised in that** by controlling the electrical power of the low-temperature plasma jet, only the flux powder of the fine-grained powdery solder is melted.

5. The process according to any one of claims 1 to 4, **characterised in that** the fine-grained powdery solder is delivered in a metered manner by means of a powder conveyor fluidised by a compressed gas to a plasmatron generating the low-temperature plasma jet.

6. A method according to any one of claims 1 to 5, **characterised in that** a primary non-equilibrium plasma with a low electrical power of < 5 kW, namely a primary low-temperature plasma, is generated within a plasmatron while supplying a working gas and generating a discharge, and the primary low-temperature plasma jet is blown out to the surface of the component through an opening of the plasmatron formed as a nozzle, wherein the fine-grained solder is introduced into the primary low-temperature plasma via the plasma gas and from there passes into the secondary low-temperature plasma jet and/or is introduced into a region of the plasma nozzle tapering towards the nozzle opening and/or is introduced directly into the secondary low-temperature plasma jet emerging from the nozzle opening.

7. Process according to claim 6, **characterised in that** noble gases, hydrogen, nitrogen, carbon dioxide or air are used as the compressed gas and as the plasma gas.

8. A process according to any one of claims 1 to 7, **characterised in that** the surface of the component is partially coated with solder, wherein the coating of the desired surface area of the component is achieved without the use of masking or apertures and the coated surface area has a limited application width of 0.5 mm to 10 mm.

9. Process according to any one of claims 1 to 8, **characterised in that** the coating of the component is carried out immediately after its production by extrusion, and thus the fused-on particles of solder encounter a warm surface.

10. The process according to claim 9, **characterised in that** the coating is carried out in-line as a process step between extrusion of the components and cooling of the coated components before further processing is carried out by cutting, straightening, spooling of the components or storage.

11. Process according to any of the addresses 1 to 10, **characterised in that** a noncorrosive metal fluoride powder, namely an alkali metal fluoride powder and/or alkali metal fluoroaluminate powder, is used as flux.

12. A method according to any one of claims 1 to 11, **characterised in that** an aluminium-silicon alloy powder, namely an alloying powder having silicon contents of 7 to 40% by weight, is used as the solder alloy powder.

13. Process according to any of the claims 1 to 12, **characterised in that** a reactive alkali metal fluorosilicate or alkali metal fluozincate is used as soldering agent.

14. Process according to one of claims 1 to 13, **characterised in that** a powder mixture consisting of solder and of fine-grained powdered zinc for corrosion protection and/or powdered functional additives for wear protection is used for coating.

## Revendications

1. Procédé pour le revêtement partiel ou complet des surfaces de composants en aluminium avec un métal d'apport pulvérulent à grain fin pour le brasage fort, pour des épaisseurs de revêtement allant jusqu'à 100 microns et des quantités totales de métal d'apport à enduire atteignant 25 g/m²,
sachant que le métal d'apport pulvérulent à grain fin se compose de particules de poudre de tailles comprises entre 3 et 25 microns,
sachant que le métal d'apport pulvérulent à grain fin est livré à un jet de plasma basse température généré par un Plasmatron,
que le métal d'apport pulvérulent à grain fin est fondu au moins en partie dans le jet de plasma basse température, sachant que sont utilisées des températures du jet de plasma basse température comprises entre 570 et 650 °C pour l'enduction exclusivement de poudre d'alliage d'apport, ou des températures du jet de plasma basse température comprises entre 530 et 620 °C pour l'enduction de poudre d'alliage d'apport et de poudre de fondant,
que le métal d'apport qui a commencé à fondre est pulvérisé au moyen du jet de plasma basse température sur les zones superficielles souhaitées du composant, sachant que le jet de plasma basse température se trouve en contact direct avec la surface du composant, de sorte que des réactions indésirables du métal d'apport avec l'atmosphère environnante sont évitées et
que le métal d'apport uniformément pulvérisé adhère sur toutes les zones superficielles souhaitées du composant, à savoir aussi sur les bords du composant.

2. Procédé selon la revendication 1, **caractérisé en ce que** le pilotage de la puissance électrique du jet de plasma basse température permet d'ajuster le degré de fusion du métal d'apport pulvérulent à grain fin entre 10 % et 80 %.

3. Procédé selon la revendication 1 ou 2, **caractérisé en ce que** le métal d'apport se compose d'une poudre d'alliage d'apport et d'une poudre de fondant avec ou sans poudre de liant.

4. Procédé selon la revendication 3, **caractérisé en ce que** le pilotage de la puissance électrique du jet de plasma basse température permet d'entamer la fonte uniquement de la poudre du fondant du métal d'apport pulvérulent à grain fin.

5. Procédé selon l'une des revendications 1 à 4, **caractérisé en ce que** le métal d'apport pulvérulent à grain fin, dosé au moyen d'un convoyeur de poudre et fluidifié par un gaz sous pression, est livré à un Plasmatron générant un jet de plasma basse température.

6. Procédé selon l'une des revendications 1 à 5, **caractérisé en ce qu'**un plasma primaire en déséquilibre, à savoir un plasma basse température primaire, est généré avec une puissance électrique réduite de < 5 kW à l'intérieur d'un Plasmatron avec apport d'un gaz de travail et génération d'une décharge, et que le jet de plasma basse température primaire est soufflé en direction de la surface du composant par un orifice du Plasmatron en forme de buse, sachant que le métal d'apport à grain fin est introduit dans le jet de plasma basse température primaire via le gaz du plasma et que de là il parvient dans le jet de plasma basse température secondaire et/ou dans une zone de la buse de plasma qui va en se rétrécissant en direction de l'orifice de la buse et/ou qu'il est introduit directement dans le jet de plasma basse température secondaire sortant par l'orifice de la buse.

7. Procédé selon la revendication 6, **caractérisé en ce que** comme gaz sous pression et comme gaz de plasma sont utilisés des gaz rares, de l'hydrogène, de l'azote, du gaz carbonique ou de l'air.

8. Procédé selon l'une des revendications 1 à 7, **caractérisé en ce que** la surface du composant est revêtue partiellement de métal d'apport, sachant que le revêtement de la zone superficielle souhaitée du composant est obtenu sans utiliser de masquages ou d'écrans, et que la zone superficielle enduite présente une largeur d'enduction limitée comprise entre 0,5 mm et 10 mm.

9. Procédé selon l'une des revendications 1 à 8, **caractérisé en ce que** le revêtement du composant a lieu immédiatement après sa fabrication par extrusion à la presse et qu'ainsi les particules du métal d'apport qui ont commencé à fondre percutent une surface chaude.

10. Procédé selon la revendication 9, **caractérisé en ce que** le revêtement a lieu en ligne, comme étape du procédé entre l'extrusion des composants et le refroidissement des composants revêtus, avant la poursuite de la transformation par sectionnement, dressage, enroulement des composants ou un stockage.

11. Procédé selon l'une des revendications 1 à 10, **caractérisé en ce que** comme fondant est utilisée une poudre de fluorure métallique non corrosive, à savoir une poudre de fluorure de métal alcalin et/ou une poudre de fluoroaluminate de métal alcalin.

12. Procédé selon l'une des revendications 1 à 11, **caractérisé en ce que** comme poudre d'alliage d'apport est utilisée une poudre d'alliage de silicium et d'aluminium, à savoir une poudre d'alliage avec des teneurs en silicium comprises entre 7 et 40 % en poids.

13. Procédé selon l'une des revendications 1 à 12, **caractérisé en ce qu'**un fluorosilicate de métal alcalin réactif ou un fluorozincate de métal alcalin est utilisé comme métal d'apport.

14. Procédé selon l'une des revendications 1 à 13, **caractérisé en ce que** pour le revêtement est utilisé un mélange pulvérulent composé de métal d'apport et de zinc pulvérulent à grain fin pour la protection anti-corrosion et/ou d'additifs fonctionnels pulvérulents pour la protection contre l'usure.
